# EUROPÄISCHE PATENTSCHRIFT

(11) **EP 2 874 838 B1**
(45) Veröffentlichungstag und Bekanntmachung des Hinweises auf die Patenterteilung: **06.12.2017**
(21) Anmeldenummer: 13742389.3
(22) Anmeldetag: 16.07.2013
(51) Int. Cl.: B60J 10/00

(54) **DICHTUNGSSTRANG ZUR VERKLEBUNG MIT EINER FAHRZEUGKAROSSERIE**
SEALING STRAND FOR ADHERING TO A VEHICLE BODY
BOUDIN D'ÉTANCHÉITÉ DESTINÉ À ÊTRE COLLÉ SUR UNE CARROSSERIE DE VÉHICULE

(30) Priorität: 17.07.2012 DE 202012102647 U
(43) Veröffentlichungstag der Anmeldung: 27.05.2015
(73) Patentinhaber: CQLT SaarGummi Technologies S.à.r.l., 5544 Remich (LU)
(72) Erfinder: THOME, Martin, 66839 Schmelz-Limbach (DE); ERSCHENS, Thomas, 66709 Weiskirchen (DE); KAST,Christian, 66663 Merzig-Brotdorf (DE)
(74) Vertreter: Patentanwälte Bernhardt / Wolff Partnerschaft mbB
(86) Internationale Anmeldenummer: PCT/EP2013/002105
(87) Internationale Veröffentlichungsnummer: WO 2014/012656

(56) Entgegenhaltungen:
- DE-A1-102006 027 697
- US-A1- 2007 180 776
- US-B1- 6 405 489

## Beschreibung

Die Erfindung betrifft einen Dichtungsstrang zur Herstellung einer Dichtung an einer Fahrzeugkarosserie unter Verklebung des Dichtungsstrangs mit der Fahrzeugkarosserie, insbesondere unter Verklebung mit einem Karosserieflansch, wobei der Dichtungsstrang einen Befestigungsabschnitt mit einer zur Verklebung mit der Fahrzeugkarosserie vorgesehenen Klebefläche und einen Dichtungsabschnitt aufweist, der unter Bildung eines Schlauches mit dem Befestigungsabschnitt auf dessen der Klebefläche abgewandten Seite verbunden ist.

Dichtungsstränge mit diesen Merkmalen sind aus der US 6,405,489 B1, die als nächster Stand der Technik gilt, und der US 2007/180776 A1 bekannt. Aus der DE 10 2006 027 697 A1 ist ferner ein solcher Dichtungsstrang bekannt, der auf seiner der Klebefläche abgewandten Seite des Befestigungsabschnitts einen Wulst mit einer ebener Auflagefläche aufweist, welcher der Übertragung der Anpresskraft eines Presswerkzeugs auf die Klebefläche dient. Der Erfindung liegt die Aufgabe zugrunde, einen neuen Dichtungsstrang der eingangs erwähnten Art zu schaffen, der bei verbesserter Dichtwirkung eine sicherere Verklebung mit der Fahrzeugkarosserie als nach dem Stand der Technik ermöglicht.

Der diese Aufgabe lösende Dichtungsstrang nach der Erfindung ist durch die Merkmalen des unabhängigen Anspruch 1 gekennzeichnet. Auf wenigstens einer Seite des Schlauchs ist ein nach innen vorgebogener Schlauchwandabschnitt gebildet. Vorteilhaft kann dieser Schlauchwandabschnitt beim Zusammenpressen nur nach innen ausweichen.

Der genannte Schlauchwandabschnitt besteht vorzugsweise aus dem gleichen Material wie der Befestigungsabschnitt, und geht insbesondere einstückig in den Befestigungsabschnitt über. Durch das härtere Material des Befestigungsabschnitts kann der Schlauchwandabschnitt im Einbauzustand der Dichtung eine größere, für die Dichtwirkung wirksame Anpresskraft übertragen. Beim Verkleben bildet er einen festen, zur Übertragung hoher Anpresskräfte auf die Klebefläche geeigneten Wulst. Der sich nach innen einbeulende Schlauchwandabschnitt ist derart angeordnet, dass er einen die Anpresskraft auf die Mitte der Klebefläche übertragenden Wulst bildet.

In der bevorzugten Ausführungsform der Erfindung liegt dem sich nach innen einbeulenden Schlauchwandabschnitt ein sich unter dem Einfluss der Anpresskraft nach außen ausbeulender Schlauchwandabschnitt gegenüber, wobei dieser Abschnitt aus Moosgummi gebildet ist und den abdichtenden Teil des Dichtungsabschnitts bildet.

Der sich nach außen ausbeulende Schlauchwandabschnitt und/oder der sich nach innen einbeulende Schlauchwandabschnitt können jeweils einen Fußabschnitt aufweisen, der sich senkrecht zur Klebefläche erstreckt.

Vorzugsweise weist der Befestigungsabschnitt auf seiner der Klebefläche abgewandten Seite einen Steg auf, der zur Anordnung zwischen einem Fußteil des sich nach außen ausbeulenden Schlauchwandabschnitts und dem Wulst, der durch den sich nach innen einbeulenden Schlauchwandabschnitt gebildet werden kann, vorgesehen ist.

Zur Verklebung des Dichtungsstrangs mit der Fahrzeugkarosserie wird vorzugsweise ein doppelseitig klebendes Klebeband verwendet.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein erstes Ausführungsbeispiel für einen Dichtungsstrang nach der Erfindung,
- Fig. 2: den Dichtungsstrang von Fig. 1 im eingebauten Zustand,
- Fig. 3: einen die Montage des Dichtungsstrangs von Fig. 1 durch Verklebung erläuternde Darstellung, und
- Fig. 4 und 5: weitere Ausführungsbeispiele für Dichtungsstränge nach der Erfindung.

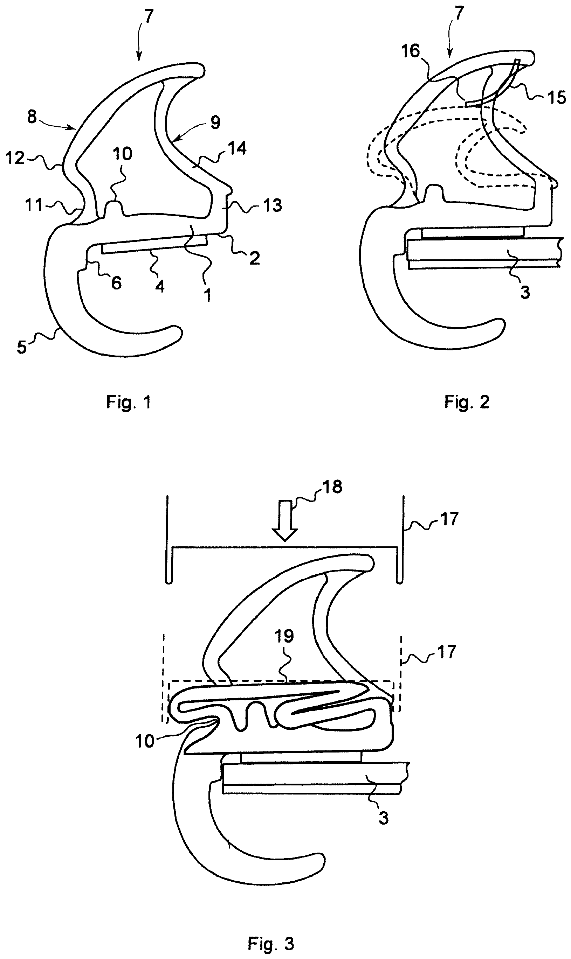

Ein in Fig. 1 gezeigter Dichtungsstrang umfasst einen Befestigungsabschnitt 1 mit einer Klebefläche 2 zur Verklebung des Dichtungsstrangs mit einem in Fig. 3 dargestellten Karosserieflansch 3 (Fig. 2,3) an einer im Übrigen nicht dargestellten Fahrzeugkarosserie. Der Verklebung dient eine doppelseitig klebendes Klebeband 4.

Mit dem Befestigungsabschnitt 1 einstückig verbunden ist eine Abdecklippe 5, die im verklebten Zustand des Dichtungsstrangs einen an der Fahrzeugkarosserie gebildeten Spalt abdeckt und nahe der Verbindungsstelle zu dem Befestigungsabschnitt 1 einen Anschlag 6 für das freie Ende des Karosserieflanschs 3 aufweist.

Auf seiner der Klebefläche 2 abgewandten Seite ist der Befestigungsabschnitt 2 unter Bildung eines Schlauches mit einem Dichtungsabschnitt 7 verbunden, der einen Schlauchwandabschnitt 8 aus Moosgummi umfasst. Der Schlauchwandabschnitt 8 ist mit dem übrigen Strang mitextrudiert. Ein Schlauchwandabschnitt 9 geht einstückig in den Befestigungsabschnitt 1 über und besteht aus einem gegenüber dem Moosgummi härteren Elastomermaterial. Nahe der Verbindungsstelle des Befestigungsabschnitts 1 mit dem Schlauchwandabschnitt 9 steht von dem Befestigungsabschnitt ein Steg 10 vor.

Wie Fig. 1 erkennen lässt, geht der Schlauchwandabschnitt 8 von einem zu der Klebefläche 2 etwa senkrechten Fußteil 11 in einen nach außen gebogenen Teilabschnitt 12 über. Der Schlauchwandabschnitt 9 weist ebenfalls einen zur Klebefläche 2 etwa senkrechten, mit 13 bezeichneten Fußteil auf, an den sich ein nach innen gebogener Teilabschnitt 14 anschließt.

Fig. 2 zeigt den Dichtungsstrang von Fig. 1 im eingebauten Zustand, in welchem er über das doppelseitig klebende Klebeband 4 mit einem an einer Fahrzeugtüröffnung umlaufenden Karosserieflansch 3 verklebt ist und mit seinem Dichtungsabschnitt 7 gegen einen Abschnitt 15 einer im Übrigen nicht gezeigten Fahrzeugtür unter Verformung der Schlauchwandabschnitte 8,9 abdichtend anliegt. Der vergleichsweise steife Schlauchwandabschnitt 9 sorgt an der Abdichtungsstelle bei 16 für eine verhältnismäßig große Anpresskraft und dadurch entsprechende Dichtwirkung.

Bei seiner Verklebung wird der Dichtungsstrang mit Hilfe einer in Fig. 3 schematisch dargestellten Rollapplikationseinrichtung 17 in Richtung des Pfeils 18 senkrecht zur Klebefläche 2 gegen den Karosserieflansch 3 gepresst, wobei der Schlauchwandabschnitt 8 unter Ausbeulung nach außen und der Schlauchwandabschnitt 9 unter Einbeulung nach innen einknicken. Der Schlauchwandabschnitt 9 bildet einen Wulst 19, welcher die durch die Rollapplikationseinrichtung 17 erzeugte Anpresskraft etwa auf die Mitte der Klebefläche 2 lenkt und eine wirksame Verklebung des Dichtungsstrangs mit dem Karosserieflansch 3 sichert. Im Randbereich der Klebefläche 2 sorgt der zwischen dem Fußteil 11 und dem Wulst 19 angeordnete Stützsteg 10 für eine zusätzliche Übertragung von Anpresskraft.

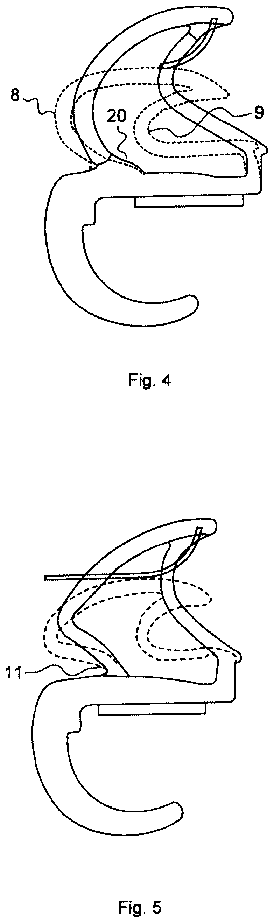

Fig. 4 zeigt einen Dichtungsstrang, der sich von dem vorangehend beschriebenen Dichtungsstrang dadurch unterscheidet, dass der Stützsteg 10 fehlt, der Schlauchwandabschnitt 9 beim Zusammenpressen gemäß Fig. 3 dafür aber einen Wulst bildet, der bis an eine seitliche Ausweitung 20 des Fußteils 11 des Schlauchwandabschnitts 8 heranreicht. Beim Zusammenpressen wird so eine gleichmäßige Übertragung der Anpresskraft auf die Klebefläche erreicht.

Bei dem Ausführungsbeispiel von Fig. 5 fehlt ebenfalls ein dem Stützsteg 10 entsprechender Stützsteg. Dafür ist der Fußteil 1 weiter zur Mitte des Befestigungsabschnitts 1 gerückt und etwas schräg nach außen gestellt.

## Patentansprüche

1. Dichtungsstrang zur Herstellung einer Dichtung an einer Fahrzeugkarosserie unter Verklebung des Dichtungsstrangs mit der Fahrzeugkarosserie, insbesondere unter Verklebung mit einem Karosserieflansch (3), wobei der Dichtungsstrang einen Befestigungsabschnitt (1) mit einer zur Verklebung mit der Fahrzeugkarosserie vorgesehenen Klebefläche (2) und einen Dichtungsabschnitt (7) aufweist, der unter Bildung eines Schlauches mit dem Befestigungsabschnitt (1) auf dessen der Klebefläche (2) abgewandten Seite verbunden ist, wobei sich der Schlauch unter dem Einfluss einer zu der Klebefläche (2) senkrechten Anpresskraft (18) auf wenigstens einer Seite nach innen einbeult, wobei auf wenigstens einer Seite des Schlauches ein nach innen vorgebogener Schlauchwandabschnitt (9) gebildet ist, **dadurch gekennzeichnet, dass** der nach innen vorgebogene Schlauchwandabschnitt (9) einen die Anpresskraft (18) gleichmäßig auf die Mitte der Klebefläche (2) übertragenden Wulst (19) bildet.

2. Dichtungsstrang nach Anspruch 1, **dadurch gekennzeichnet,**
**dass** der Schlauchwandabschnitt (9) aus dem gleichen Material wie der Befestigungsabschnitt (1) gebildet ist und insbesondere einstückig in den Befestigungsabschnitt übergeht.

3. Dichtungsstrang nach einem der Ansprüche 1 bis 2, **dadurch gekennzeichnet,**
**dass** dem nach innen vorgebogenen Schlauchwandabschnitt (9) ein sich unter dem Einfluss der Anpresskraft (18) nach außen ausbeulender Schlauchwandabschnitt (8) gegenüberliegt.

4. Dichtungsstrang nach Anspruch 3, **dadurch gekennzeichnet,**
**dass** der nach innen vorgebogene Schlauchwandabschnitt (9) und/oder der sich nach außen ausbeulende Schlauchwandabschnitt (8) einen sich senkrecht zu der Klebefläche (2) erstreckenden Fußteil (11,13) aufweisen bzw. aufweist.

5. Dichtungsstrang nach Anspruch 3 oder 4, **dadurch gekennzeichnet,**
**dass** der Befestigungsabschnitt (1) auf seiner der Klebefläche (2) abgewandten Seite einen Stützsteg (10) aufweist, der zur Anordnung zwischen einem Fußteil (11) des sich nach außen ausbeulenden Schlauchwandabschnitts (8) und dem Wulst (19) angeordnet ist, der durch den vorgebogenen, sich nach innen einbeulenden Schlauchwandabschnitt (9) gebildet wird.

6. Dichtungsstrang nach einem der Ansprüche 1bis 5, **dadurch gekennzeichnet,**
**dass** zur Verklebung des Dichtungsstrangs mit der Fahrzeugkarosserie ein doppelseitig klebendes Klebeband (4) vorgesehen ist.

## Claims

1. Sealing strand for producing a seal on a vehicle body by adhesively bonding the sealing strand to the vehicle body, in particular by adhesively bonding same to a body flange (3), wherein the sealing strand has a fastening portion (1) with an adhesive surface (2) provided for the adhesive bonding to the vehicle body, and a sealing portion (7) which is connected to the fastening portion (1), on the side thereof facing away from the adhesive surface (2), with a tube being formed, wherein the tube buckles inwards on at least one side under the influence of a contact pressure force (18) which is perpendicular to the adhesive surface (2), wherein an inwardly pre-curved tube wall portion (9) is formed on at least one side of the tube, **characterized in that** the inwardly pre-curved tube wall portion (9) forms a bead (19) which transmits the contact pressure force (18) uniformly to the centre of the adhesive surface (2).

2. Sealing strand according to Claim 1, **characterized in that** the tube wall portion (9) is formed from the same material as the fastening portion (1) and in particular merges integrally into the fastening portion.

3. Sealing strand according to either of Claims 1 and 2, **characterized in that** a tube wall portion (8) which bulges outwards under the influence of the contact pressure force (18) lies opposite the inwardly pre-curved tube wall portion (9).

4. Sealing strand according to Claim 3, **characterized in that** the inwardly pre-curved tube wall portion (9) and/or the outwardly bulging tube wall portion (8) have/has a foot part (11, 13) extending perpendicularly to the adhesive surface (2).

5. Sealing strand according to Claim 3 or 4, **characterized in that** the fastening portion (1) has, on its side facing away from the adhesive surface (2), a supporting web (10) which is arranged for arrangement between a foot part (11) of the outwardly buckling tube wall portion (8) and the bead (19) which is formed by the pre-curved, inwardly buckling tube wall portion (9).

6. Sealing strand according to one of Claims 1 to 5, **characterized in that** a double-sided adhesive tape (4) is provided for the adhesive bonding of the sealing strand to the vehicle body.

## Revendications

1. Garniture d'étanchéité pour la réalisation d'une étanchéité au niveau d'une carrosserie de véhicule avec collage de la garniture d'étanchéité à la carrosserie de véhicule, en particulier avec collage à une bride (3) de carrosserie, la garniture d'étanchéité présentant une section de fixation (1) pourvue d'une surface adhésive (2) destinée au collage à la carrosserie de véhicule et d'une section d'étanchéité (7), qui est reliée à la section de fixation (1) sur sa face opposée à la surface adhésive (2) avec formation d'un tuyau, le tuyau se déformant vers l'intérieur sur au moins une face sous l'influence d'une force de compression (18) perpendiculaire à la surface adhésive (2), une section (9) de paroi de tuyau prépliée vers l'intérieur étant formée sur au moins une face du tuyau, **caractérisée en ce que** la section (9) de paroi de tuyau prépliée vers l'intérieur forme un bourrelet (19) transmettant la force de compression (18) régulièrement au centre de la surface adhésive (2).

2. Garniture d'étanchéité selon la revendication 1, **caractérisée en ce que** la section (9) de paroi de tuyau est formée par le même matériau que la section de fixation (1) et se change, en particulier d'un tenant, en section de fixation.

3. Garniture d'étanchéité selon l'une quelconque des revendications 1 à 2, **caractérisée en ce qu'**une section (8) de paroi de tuyau se déformant vers l'extérieur sous l'influence de la force de compression (18) se situe à l'opposé de la section (9) de paroi de tuyau prépliée vers l'intérieur.

4. Garniture d'étanchéité selon la revendication 3, **caractérisée en ce que** la section (9) de paroi de tuyau prépliée vers l'intérieur et/ou la section (8) de paroi du tuyau se déformant vers l'extérieur présente(nt) une partie de pied (11, 13) s'étendant perpendiculairement à la surface adhésive (2).

5. Garniture d'étanchéité selon la revendication 3 ou 4, **caractérisée en ce que** la section de fixation (1) présente, sur sa face opposée à la surface adhésive (2), une âme support (10), qui est disposée entre une partie de pied (11) de la section (8) de paroi de tuyau se déformant vers l'extérieur et le bourrelet (19) qui est formé par la section (9) de paroi de tuyau se déformant vers l'intérieur, prépliée.

6. Garniture d'étanchéité selon l'une quelconque des revendications 1 à 5, **caractérisée en ce qu'**un ruban adhésif (4) double face est prévu pour le collage de la garniture d'étanchéité avec la carrosserie de véhicule.
